# FASCICULE DE BREVET EUROPEEN

(11) **EP 2 858 881 B1**
(45) Date de publication et mention de la délivrance du brevet: **03.08.2016**
(21) Numéro de dépôt: 13728144.0
(22) Date de dépôt: 03.06.2013
(51) Int. Cl.: B62D 25/14, B62D 1/16

(54) **TRAVERSE POUR PLANCHE DE BORD AVEC FIXATION ALLÉGÉE DE COLONNE DE DIRECTION**
QUERSTREBE EINES ARMATURENBRETTS MIT VESCHMÄLERTER LENKSÄULENBEFESTIGUNG
DASHBOARD CROSSMEMBER WITH PARED-DOWN STEERING COLUMN ATTACHEMENT

(30) Priorité: 07.06.2012 FR 1255345
(43) Date de publication de la demande: 15.04.2015
(73) Titulaire: Peugeot Citroën Automobiles SA, 78140 Vélizy-Villacoublay (FR); Faurecia Intérieur Industrie, 92000 Nanterre (FR)
(72) Inventeur: JULLIOT, Eric, F-78200 Mantes la Jolie (FR); TERSAC, Julien, F-91750 Champcueil (FR); APPASAMY, Jean Michel, F-78760 Jouars Pontchartrain (FR)
(74) Mandataire: Fosse, Danièle
(86) Numéro de dépôt international: PCT/EP2013/061392
(87) Numéro de publication internationale: WO 2013/182525

(56) Documents cités:
- EP-A1- 1 193 161
- DE-A1-102007 032 481
- FR-A1- 2 925 450

## Description

La présente invention revendique la priorité de la demande française 1255345 déposée le 7 juin 2012.

La présente invention se rapporte au domaine général des traverses destinées à équiper des véhicules, notamment des véhicules automobiles, et plus particulièrement à venir se fixer à la caisse du véhicule, transversalement au sens de la marche, pour permettre la fixation de la planche de bord dudit véhicule ainsi que de divers accessoires tels que ventilation, colonne de direction, boîte à fusibles, boîte à gants, etc.

De manière connue, de telles traverses comprennent généralement une barre transversale formée d'une tubulure en acier qui s'étend entre deux brides de fixation permettant d'arrimer ladite barre à la caisse du véhicule, et qui est en outre usuellement soutenue par une jambe de force centrale portant sur le plancher du véhicule.

Bien que les traverses connues donnent généralement satisfaction, notamment du fait qu'elles offrent un socle pratique et robuste, indispensable à la fixation de nombreux accessoires, elles peuvent toutefois souffrir de certains inconvénients.

En effet, il est en particulier connu, par exemple par le document EP-1 193 161, de réaliser l'interface entre la traverse et la colonne de direction en rapportant et en soudant à la partie inférieure du tube formant la barre transversale une ou plusieurs semelles métalliques, du genre goulottes, qui offrent à leur tour des points d'arrimage à une bride qui maintient ladite colonne de direction.

Or, un tel agencement, qui met en oeuvre de nombreuses pièces métalliques relativement fortes, peut se révéler relativement encombrant, et de surcroît relativement lourd, ce qui peut être préjudiciable notamment à l'habitabilité du véhicule, ou au poids dudit véhicule, et par conséquent à la consommation de carburant et aux émissions polluantes de celui-ci.

En outre, une telle disposition constructive requiert des cordons de soudure étendus, qui doivent parfois être réalisés dans des zones difficiles d'accès, afin d'assurer une fixation stable et équilibrée des semelles, ce qui contribue à allonger le temps de fabrication et à augmenter tant la consommation de matière première que le coût de production du véhicule.

Les objets assignés à l'invention visent par conséquent à remédier aux inconvénients susmentionnés et à proposer une nouvelle traverse de planche de bord pour véhicule qui, tout en étant robuste et en permettant un maintien efficace de la colonne de direction, présente une structure allégée et compacte, facile à fabriquer et à mettre en oeuvre au sein du véhicule.

Les objets assignés à l'invention visent également à proposer un nouveau procédé de fabrication de traverse de planche de bord qui permette l'obtention d'une traverse allégée et compacte, avec une bonne productivité et à moindre coût.

Les objets assignés à l'invention sont atteints à l'aide d'une traverse de planche de bord pour véhicule, ladite traverse comprenant une barre transversale qui s'étend selon un axe générateur (YY') et qui présente, de part et d'autre dudit axe générateur, une face avant destinée à être orientée vers l'intérieur de l'habitacle d'un véhicule et une face arrière opposée, destinée à être orientée vers un pan de carrosserie du véhicule, ladite barre transversale étant pourvue de moyens de réception adaptés pour permettre la fixation d'une colonne de direction à ladite barre transversale, ladite traverse étant caractérisée en ce que lesdits moyens de réception sont fractionnés de part et d'autre de l'axe générateur (YY') en au moins d'une part un premier organe de suspension avant, qui prend appui contre la face avant de la barre transversale afin de procurer un premier point d'arrimage avant pour la colonne de direction, et d'autre part un second organe de suspension arrière qui prend appui contre la face arrière de ladite barre transversale de sorte à procurer un second point d'arrimage arrière pour ladite colonne de direction, à distance du premier point d'arrimage, lesdits organes de suspension étant agencés de sorte à présenter, sous la barre transversale, dans le secteur angulaire compris entre les premier et second points d'arrimage, autour de l'axe générateur (YY'), une interruption de leur couverture angulaire.

Avantageusement, l'agencement conforme à l'invention permet de répartir de part et d'autre de la barre transversale les points d'arrimage destinés à assurer la fixation, et plus particulièrement la suspension, de la colonne de direction, en utilisant des organes de suspension qui ne couvrent au plus que partiellement le secteur angulaire compris entre les points d'arrimage, c'est-à-dire qui présentent des dimensions réduites par rapport aux semelles connues, au sein desquelles, jusqu'à présent, une même surface de fixation ininterrompue enveloppait au contraire toute la portion inférieure de la barre comprise entre les points d'arrimage, à la manière d'un pont massif qui franchissait et encombrait tout le secteur angulaire correspondant.

L'invention permet par conséquent de réaliser l'interface de fixation entre la traverse et la colonne de direction avec des pièces moins étendues, donc moins encombrantes et plus légères, qui requièrent moins de matière première tant pour leur fabrication que pour leur fixation à la barre transversale, mais dont l'agencement et la répartition leur permettent malgré tout de procurer une assise stable et solide à la colonne de direction.

En outre, l'interruption de la couverture angulaire des organes de suspension autour de la partie inférieure de la barre transversale permet au besoin de ménager, immédiatement sous ladite barre transversale, entre les points d'arrimage, un secteur angulaire de dégagement vide de matière, sur lequel n'empiètent pas lesdits organes de suspension, ledit secteur de dégagement offrant avantageusement un espace libre qui permet d'opérer une fixation très rapprochée de la colonne de direction, cette dernière pouvant alors croiser ladite barre transversale au plus près de celle-ci, sans surépaisseur intercalaire inutile, de telle sorte que l'on peut obtenir un assemblage particulièrement compact, notamment en hauteur.

Avantageusement, bien que l'encombrement et la masse des moyens de réception de la colonne de direction soient réduits, l'implantation et la fixation de ladite colonne de direction demeurent simples à effectuer, selon un accès relativement conventionnel et bien dégagé.

A ce titre, il est remarquable que l'on peut au besoin reproduire, avec les pièces allégées conformes à l'invention, un schéma d'implantation standard, connu et éprouvé, des points d'arrimage, ce qui garantit l'adaptabilité et l'interchangeabilité potentielle de la solution objet de l'invention avec les systèmes de fixation antérieurement connus.

Les objets assignés à l'invention sont également atteints à l'aide d'un procédé de fabrication d'une traverse de planche de bord pour véhicule comprenant une étape (b) d'assemblage de moyens de réception au cours de laquelle on met en place, sur une barre transversale de la traverse, des moyens de réception destinés à l'accueil et à la fixation d'une colonne de direction, ledit procédé étant caractérisé en ce qu'il comporte une étape (a) de réalisation d'organes de suspension au cours de laquelle on réalise, de préférence séparément en pièces détachées distinctes, d'une part un premier organe de suspension avant portant un premier point d'arrimage pour la colonne de direction, et d'autre part un second organe de suspension arrière portant un second point d'arrimage pour la colonne de direction, et en ce que, au cours de l'étape (b) d'assemblage, on rapporte et l'on fixe, de préférence par soudage, le premier organe de suspension sur la face avant de la barre transversale destinée à être orientée vers l'habitacle, et le second organe de suspension sur la face arrière opposée de ladite barre transversale destinée à être orientée vers la carrosserie, de sorte à ne couvrir au plus que partiellement le secteur angulaire du dessous de la barre transversale qui est compris entre lesdits premier et second points d'arrimage.

Outre qu'il permet d'obtenir une traverse procurant les avantages susmentionnés, un tel procédé permet avantageusement d'opérer la fixation des organes de suspension dans des zones facilement accessibles et relativement peu étendues, ce qui limite par exemple l'amplitude de la course angulaire que doit effectuer le robot de soudage (voire de collage) pour réaliser le cordon correspondant.

Le cas échéant, le cycle de fabrication peut s'en trouver raccourci, et l'outillage simplifié. De surcroît, le procédé peut ainsi permettre une économie de soudure et/ou d'énergie.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
- La figure 1 illustre, selon une vue d'ensemble une perspective éclatée, un exemple de réalisation de traverse de planche de bord conforme à l'invention.
- La figure 2 illustre, selon une vue d'ensemble en perspective, la traverse de la figure 1 une fois assemblée.
- La figure 3 illustre, selon une vue partielle en perspective de dessous, une portion de la traverse des figures 1 et 2 détaillant l'implantation des organes de suspension.
- La figure 4 illustre, selon une vue en coupe normale à l'axe générateur (YY') de la barre transversale, l'implantation des organes de suspension de la traverse des figures 1 à 3.
- La figure 5 illustre, selon une vue en coupe dans le même plan que celui de la figure 4, la traverse équipée d'une colonne de direction fixée, sous la barre transversale, contre les organes de suspension, en vis-à-vis de la face inférieure de la barre transversale.

La présente invention concerne une traverse de planche de bord 1 pour véhicule, ladite traverse comprenant une barre transversale 2 qui s'étend selon un axe générateur (YY') et qui présente, de part et d'autre dudit axe générateur, une face avant 3 destinée à être orientée vers l'intérieur de l'habitacle d'un véhicule (non représenté) et une face arrière 4 opposée, destinée à être orientée vers un pan de carrosserie 5 du véhicule, et préférentiellement vers le tablier 6 séparant le compartiment moteur avant de l'habitacle dudit véhicule.

De préférence, la barre transversale 2 sera formée par une structure rigide, préférentiellement creuse, du genre tube, de base préférentiellement sensiblement circulaire, tel que cela est représenté sur les figures, ou encore polygonale ou sensiblement hémicylindrique.

Ladite barre 2 pourra être réalisée par exemple dans un matériau métallique, tel que l'acier, ou bien encore dans un matériau composite, par exemple de type à matrice polymère renforcé de fibres de verre, de carbone ou d'aramide, et éventuellement revêtu, par exemple par surmoulage, d'une coque polymère.

Le tube pourra éventuellement être rempli de mousse polymère, notamment pour améliorer son comportement vis-à-vis des vibrations.

De préférence, la traverse 1, et plus particulièrement la barre transversale 2, s'étendra, une fois montée au sein du véhicule, transversalement à la direction de marche dudit véhicule, et préférentiellement sensiblement sur toute la largeur de ce dernier.

Par convention, et par commodité de description, on désignera par « X » la direction correspondant à la direction horizontale de marche avant-arrière du véhicule, par « Y » la direction latérale transverse (gauche-droite) dudit véhicule, qui correspond globalement à la direction d'extension longitudinale de la traverse 1 et plus particulièrement de la barre transversale 2, et par « Z » la direction, ici verticale, qui forme avec les précédentes un trièdre direct.

Bien qu'il ne soit pas exclu que l'axe générateur (YY'), qui correspond avantageusement à la ligne moyenne de la barre transversale 2, et plus particulièrement à l'axe central de révolution du tube constituant ladite barre, puisse être au moins localement curviligne et/ou former une ligne brisée comprenant une succession de segments sécants marquant des décrochements, ledit axe générateur (YY') sera de préférence sensiblement rectiligne et parallèle à la direction latérale transverse Y.

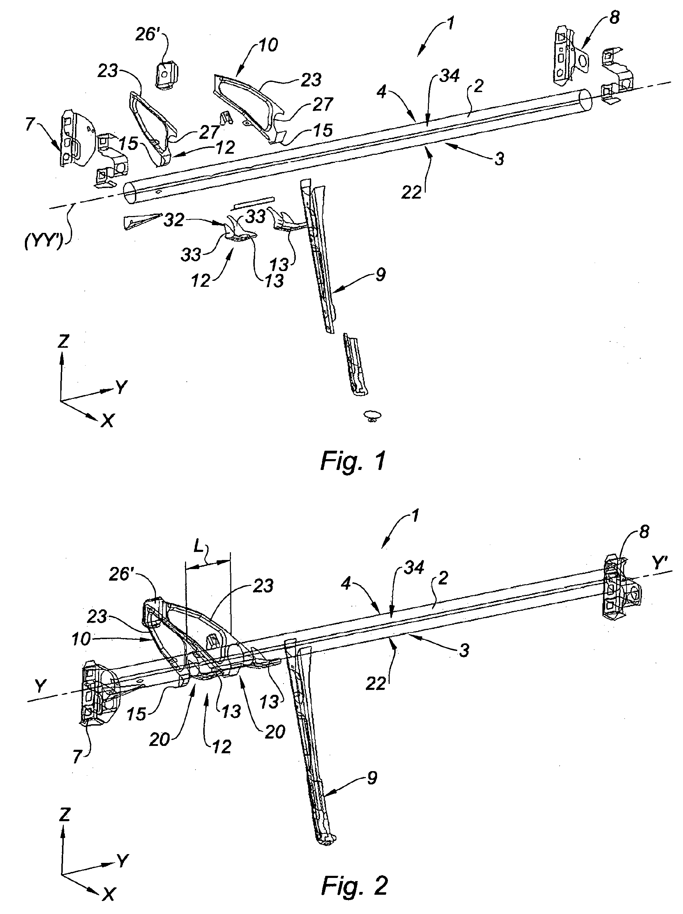

De préférence, tel que cela est illustré sur les figures 1 et 2, la traverse 1 comprend au moins deux brides latérales de liaison 7, 8 disposées longitudinalement de part et d'autre de la barre transversale 2, sensiblement aux extrémités de cette dernière, de telle sorte que lesdites brides 7, 8 peuvent venir se fixer chacune à l'un des côtés (gauche et droit) de la caisse du véhicule.

La traverse 1 comprendra de préférence également une jambe de force 9 destinée à venir en appui sur le plancher du véhicule afin de soutenir la barre transversale 2, ladite jambe de force se situant dans une position intermédiaire à distance des deux brides latérales de liaison 7, 8, de préférence sensiblement au niveau de la console centrale de la planche de bord.

Par ailleurs, la traverse 1 comprendra préférentiellement, une fourche de fixation 10, de préférence déformable en cas de choc, et par exemple réalisée en acier, qui retient la traverse 1, et plus particulièrement la barre transversale 2 à une portion avant de la carrosserie du véhicule, et plus particulièrement à la caisse, et notamment au tablier 6, de préférence sensiblement en vis-à-vis de la colonne de direction 11.

Selon l'invention, la barre transversale 2 est avantageusement pourvue de moyens de réception 12 conçus pour permettre la fixation d'une colonne de direction 11 à ladite barre transversale 2.

Avantageusement, lesdits moyens de réception 12 sont fractionnés de part et d'autre de l'axe générateur (YY') en au moins d'une part un premier organe de suspension 13 avant, qui prend appui contre la face avant 3 de la barre transversale afin de procurer un premier point d'arrimage 14 avant pour la colonne de direction 11, et d'autre part un second organe de suspension 15 arrière qui prend appui contre la face arrière 4 de ladite barre transversale de sorte à procurer un second point d'arrimage 16 arrière pour ladite colonne de direction 11, à distance du premier point d'arrimage 14.

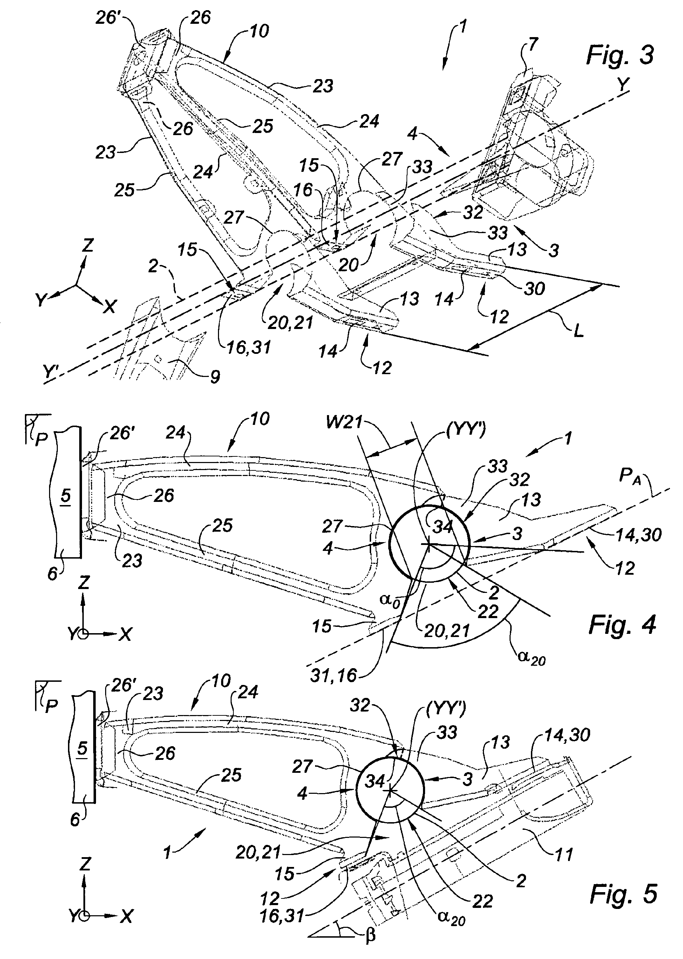

De préférence, lesdits points d'arrimage 14, 16 forment des zones d'appui et d'accrochage, et sont avantageusement disposés à cet effet de telle sorte que la colonne de direction 11, et plus particulièrement, par exemple, le berceau ou le palier qui soutient ladite colonne, vient se fixer, par exemple par vissage, simultanément sur lesdits deux points d'arrimage, sous la barre 2, que ladite colonne de direction croise de préférence sensiblement transversalement à l'axe générateur (YY'), préférentiellement selon un angle d'inclinaison β non nul par rapport à l'horizontale, et notamment de façon ascendante depuis la face arrière 4 vers la face avant 3, tel que cela est illustré sur la figure 5.

Avantageusement, l'espacement angulaire, et plus particulièrement et la répartition des points d'arrimage 14, 16 entre l'avant et l'arrière, et le cas échéant, la mise en oeuvre d'au moins deux paires d'organes de suspension 13, 15 avant/arrière étagés, par paire, à des abscisses distinctes selon l'axe générateur (YY'), tel que cela est illustré sur les figures 1 à 3, permet d'offrir à la colonne de direction 11 une assise particulièrement stable et robuste, de préférence à au moins quatre points d'arrimage, préférentiellement coplanaires.

Selon l'invention, les organes de suspension 13, 15 sont avantageusement agencés de sorte à présenter, sous la barre transversale 12, dans le secteur angulaire α0 compris entre les premier et second points d'arrimage 14, 16, autour de l'axe générateur (YY'), une interruption 20 de leur couverture angulaire.

Avantageusement, en interrompant ainsi les organes de suspension 13, 15 entre les points d'arrimage 14, 16, à l'aplomb de la barre 2, c'est-à-dire au niveau de la face d'accouplement que ladite barre 2 présente en vis-à-vis de la colonne 11 de direction, on limite la couverture angulaire, et par conséquent l'encombrement et la masse de chacun desdits organes de suspension 13, 15, ce qui confère à l'ensemble un agencement compact et allégé.

En effet, le premier organe de suspension 13 présente une couverture angulaire au plus partielle du dessous de la barre 2, entre la face avant 3 et la face arrière 4, de telle sorte qu'il ne s'étend pas suffisamment, vers l'arrière et en passant par le dessous de ladite barre 2, pour atteindre la position angulaire, considérée autour de l'axe générateur (YY') dans un plan de section normal audit axe générateur, du second point d'arrimage 16 arrière procuré par le second organe de suspension 15, et angulairement espacé dudit premier point d'arrimage 14 avant.

Réciproquement, le second organe de suspension 15 présente une couverture angulaire au plus partielle du dessous de la barre 2, entre la face arrière 4 et la face avant 3, de telle sorte qu'il ne s'étend pas suffisamment, vers l'avant et en passant par le dessous de ladite barre 2, pour atteindre la position angulaire du premier point d'arrimage 14 avant procuré par le premier organe de suspension 13.

En particulier, quelle que soit l'abscisse à laquelle on se place le long de l'axe générateur (YY'), que le premier et le second organe de suspension 13, 15 soient décalés l'un part rapport à l'autre le long dudit axe générateur, c'est-à-dire situés à des abscisses distinctes, ou bien au contraire que lesdits premier et second organes de suspension 13, 15 soient sensiblement placés dans un même alignement avant-arrière, à la même abscisse, tel que cela est illustré sur les figures, le secteur angulaire occupé, le cas échéant de façon cumulée, par lesdits premier et second organes de suspension 13, 15 sera restreint de telle manière que la couverture angulaire de la face inférieure 22 de la barre transversale 2 sera incomplète, laissant ainsi subsister, dans le plan de section P normal à l'axe générateur (YY') et situé à l'abscisse considérée, un secteur angulaire de dégagement α20, tel que cela est notamment illustré sur les figures 4 et 5.

Ainsi, grâce à un tel agencement non jointif, les moyens de réception seront notamment dépourvus de pont joignant l'un à l'autre le premier point d'arrimage avant 14 au second point d'arrimage arrière 15 en passant par le dessous de la barre 2, entre ladite barre 2 et la colonne de direction 11.

Il est du reste remarquable que, si la variante préférentielle exposée ici vise une fixation de la colonne de direction 11 par suspension sous la barre transversale 2, il est tout-à-fait envisageable de transposer mutatis mutandis à d'autres configurations de fixation le principe de l'invention, qui consiste à scinder les moyens de réception 12 en prévoyant un fractionnement des organes de fixation 13, 15 de part et d'autre de l'axe générateur, suivant la direction d'implantation de la colonne 11, de sorte à ménager une interruption 20 procurant un secteur angulaire de dégagement α20 au niveau de l'emplacement destiné à la colonne de direction, entre la colonne de direction 11 et la face de la barre transversale 2 la plus proche de ladite colonne 11, c'est-à-dire de manière à ce que chaque organe de fixation 13, 15 dégage, au moins en partie, le secteur angulaire, compris entre les points d'arrimage, de la face en vis-à-vis de laquelle ladite colonne de direction 11 vient se fixer.

En particulier, on pourrait envisager une fixation par soutènement, la colonne 11 reposant alors sur le dessus de la barre 2, l'interruption 20 et le secteur angulaire de dégagement se trouvant alors en vis-à-vis de la face formant la limite supérieure de la barre transversale 2.

De préférence, le premier organe de suspension 13 et le second organe de suspension 15 s'interrompent angulairement en retrait l'un de l'autre de telle sorte que s'ouvre entre eux, sur une partie du secteur angulaire α0 compris entre le premier et le second point d'arrimage, un sillon de dégagement 21 sensiblement parallèle à l'axe générateur (YY'), qui s'étend le long dudit axe générateur (YY'), sur la longueur L du tronçon de barre transversale 2 occupé par lesdits organes de suspension 13, 15, et dont le fond est formé par la face inférieure 22 de la barre transversale ainsi découverte.

En d'autres termes, le cerclage de la barre 2 par les organes de suspension 13, 15 est avantageusement interrompu en vis-à-vis de la face d'accouplement à la colonne de direction 11, lesdits organes de suspension formant ainsi au plus, y compris par leur réunion, un manchon en C ouvert sur le dessous, qui laisse subsister un sillon 21 vide de matière formant une tranchée bordée respectivement vers la face avant 3 par le premier organe de suspension avant 13, et vers la face arrière 4 par le second organe de suspension 15.

Ainsi, même en projection dans un plan P normal à l'axe générateur (YY'), les organes de suspension 13, 15 occupent des secteurs angulaires non contigus, et ne possèdent ainsi pas de chevauchement angulaire sous la barre 2, le secteur angulaire de dégagement α20 se prolongeant ainsi avantageusement sur toute la longueur L du tronçon de barre 2 délimité, en abscisse, par lesdits organes de suspension, et exposant ainsi la face inférieure de la barre 2 à nu.

A titre indicatif, le secteur angulaire de dégagement α20 peut couvrir un angle sensiblement compris entre 45 degrés, voire 60 degrés, et 90 degrés, voire 120 degrés.

La largeur W21 du sillon de dégagement 21, correspondant plus particulièrement à la distance de séparation minimale du premier et du second organe de suspension sous la barre, transversalement à l'axe générateur (YY'), laquelle peut éventuellement, notamment si les organes de suspension divergent suffisamment, correspondre sensiblement à la longueur de la corde joignant les limites de l'arc correspondant au secteur angulaire de dégagement, peut alors être par exemple comprise sensiblement entre 3 cm, voire 4 cm, et 6 cm, voire davantage.

Le dégagement 20, 21 procuré par l'interstice ménagé entre les organes de suspension avant et arrière peut à ce titre avantageusement contribuer à fournir plus d'espace, et donc un accès mieux dégagé à la colonne de direction 11 lors du montage de cette dernière, et peut du reste avantageusement subsister après ledit montage, entre ladite colonne et la barre 2, tel que cela est illustré sur la figure 5.

De préférence, la traverse 1, et plus particulièrement la fourche de liaison 10, comporte au moins un hauban 23, et de préférence deux haubans 23, destiné(s) à venir se fixer sur la carrosserie 5 du véhicule, et de préférence sur le tablier 6 dudit véhicule, afin de soutenir la barre transversale 2.

Selon une caractéristique préférentielle qui peut constituer une invention à part, entière le second organe de suspension 15 est, quel que soit notamment l'agencement de la barre transversale 2 et des moyens de réception 12, venu de matière avec ledit hauban 23.

Une telle disposition constructive permet non seulement de simplifier la structure de la traverse, et par conséquent son assemblage, en réduisant le nombre de pièces détachées, mais également de faciliter la fabrication de l'organe de suspension 15 arrière, selon une configuration convenablement positionnée d'emblée.

A ce titre, il est notamment envisageable d'obtenir ledit organe de suspension 15 sous forme d'une languette ou d'une excroissance du hauban 23, et plus globalement d'obtenir ledit hauban 23 dans sa totalité, par un procédé de mise en forme approprié, tel que moulage, emboutissage ou pliage.

Selon une variante de réalisation préférentielle correspondant aux figures 1 à 3, chaque hauban 23 peut comporter au moins une, et de préférence deux poutres 24, 25, de préférence disposées l'une au-dessus de l'autre, par exemple sensiblement en trapèze, qui relient chacune une embase 26, de préférence coiffée d'une plaque d'interface 26' venant se fixer, de préférence en contact plan, contre la carrosserie 5, et correspondant préférentiellement à la petite base du trapèze, à un piètement 27, correspondant préférentiellement à la grande base dudit trapèze, piétement qui est de préférence sensiblement vertical, et de préférence de forme sensiblement conjuguée à celle de la face arrière 4, plane ou incurvée, de la barre transversale 2 qui vient s'adosser contre ledit piétement 27.

Le cas échéant, le second organe de suspension 15 pourra être formé par un prolongement du piétement 27 vers la colonne de direction 11, ici vers le bas, et de préférence être formé d'un seul tenant, avec les deux poutres 24, 25, l'embase 26 et ledit piétement 27.

De façon particulièrement préférentielle, la fourche de fixation 10 pourra comporter deux haubans 23, de préférence sensiblement symétriques l'un de l'autre par rapport au plan normal à l'axe générateur (YY') situé à mi-distance de chacun d'eux, qui pourront avantageusement être maintenus, et par exemple soudés, à la même plaque d'interface 26'.

De préférence, le premier et le second organe de suspension 13, 15 sont agencés de telle sorte que le plan d'accouplement PA parallèle à l'axe générateur (YY') et contenant le premier et le second point d'arrimage 14, 16 est sensiblement tangent à la face extérieure inférieure 22 de la barre transversale 2, ou déporté en saillie au-delà de celle-ci, tel que cela est notamment illustré sur la figure 4.

Avantageusement, selon que l'on mettra en oeuvre un agencement tangent ou au contraire saillant vers le bas dudit plan d'accouplement PA, on pourra réaliser un accouplement compact de la colonne de direction 11 au plus près de la barre 2, ladite colonne 11 occupant voire se substituant à la matière retirée aux organes de suspension pour former le secteur de dégagement α20, ou bien au contraire un accouplement distant préservant un vide entre la colonne 11 et la barre 2, dans ledit secteur de dégagement.

Cette dernière configuration, en saillie, pourra notamment être choisie de sorte à présenter la même configuration spatiale des points d'arrimage 14, 16 que celle, connue et éprouvée, des organes de suspension de l'art antérieur, ce qui rendrait les nouveaux organes de suspension, et plus globalement la traverse 1 conforme à l'invention, interchangeables avec les éléments de traverses connues.

La solution conforme à l'invention serait ainsi immédiatement adaptable, sur les véhicules connus, sans nécessiter de nouveau développement.

Selon encore une autre variante (non représentée), il serait envisageable de placer les points d'arrimage 14, 16 en retrait de la tangente au dessous de la barre 2, et de prévoir des entretoises de compensation sur les fixations de la colonne 11 et/ou en réduisant localement le diamètre de la barre transversale, par exemple par emboutissage, afin d'éviter une interférence de ladite colonne 11 avec ladite barre 2.

De préférence, le premier et le second organe de suspension 13, 15 présentent chacun respectivement, pour former les premier et second points d'arrimage 14, 16, une première semelle d'appui 30 et une seconde semelle d'appui 31 planes, tel que cela est illustré sur les figures 3 à 5, lesdites semelles étant disposées à distance l'une de l'autre de façon coplanaires, dans le prolongement l'une de l'autre.

Avantageusement, une telle configuration permet d'obtenir un appui à plat des colliers ou paliers de la colonne de direction 11 directement sur lesdites semelles, ce qui procure une fixation simple, robuste et stable.

En outre, le plan d'accouplement PA commun auxdites semelles d'appui 30, 31 pourra avantageusement être incliné par rapport à l'horizontale de sorte à déterminer sensiblement la direction d'orientation de l'axe de la colonne de direction.

Selon une variante de réalisation préférentielle, le premier organe de suspension 13 comporte d'un seul tenant d'une part une semelle d'appui 30 formant un éperon orienté vers l'avant et offrant le premier point d'arrimage 14, et d'autre part un crochet de retenue 32, comprenant par exemple une ou deux griffes 33 recourbées, ledit crochet 32 étant conçu pour venir en prise sur la face avant 3 et/ou la face supérieure 34 de la barre transversale 2 dont il épouse sensiblement le contour extérieur.

Avantageusement, le crochet 32, et plus globalement le premier organe de suspension 13 pourra être formé par découpe puis pliage en U d'une plaque, de préférence métallique, par exemple en acier, et de préférence d'épaisseur constante, dont la semelle d'appui 30 forme la branche inférieure qui relie l'une à l'autre les deux griffes 33, elles mêmes dressées de préférence sensiblement à 90 degrés par rapport à ladite semelle.

Lesdites griffes 33 pourront avantageusement envelopper en tout ou partie les faces avant 3 et/ou supérieure 34 de la barre 2, par exemple sur au moins un quart, voire au moins un tiers de la circonférence de ladite barre 2, et ainsi procurer une fixation robuste et stable.

Elles pourront avantageusement être fixées à la barre 2, par exemple par un ou des cordons de soudure, de préférence sur la majorité voire la totalité de ladite portion de circonférence sur laquelle elles sont en contact avec ladite barre 2.

Le cas échéant, l'ensemble formé par d'une part le hauban 23, et plus particulièrement la portion supérieure du piétement 27, et d'autre part le premier organe de suspension 13, et plus particulièrement le crochet 32, pourra couvrir, en combinaison, de manière ininterrompue, toute la face supérieure 34 de la barre 2, et, plus globalement, s'étendre sur trois faces, avant, supérieure et arrière, de ladite barre 2, et notamment sur plus de la moitié de la circonférence de ladite barre transversale 2, de préférence sur tout le secteur angulaire complémentaire au secteur angulaire de dégagement α20, en assurant ainsi un maintien très enveloppant, particulièrement rigide, solide et stable.

Bien entendu, l'homme du métier sera à même d'isoler ou de combiner entre elles tout ou partie des caractéristiques décrites ci-dessus, notamment selon la position et l'orientation qu'il souhaite conférer à la traverse au sein du véhicule, à la colonne de direction par rapport à la traverse, ou encore selon le nombre et l'agencement des organes de suspension qu'il souhaite mettre en oeuvre.

L'invention concerne par ailleurs en tant que tel un hauban 23 de fixation pour traverse 1 de planche de bord de véhicule, de préférence à déformation programmée en cas de choc, destiné à relier à la carrosserie 5 d'un véhicule la barre transversale 2 d'une traverse de planche de bord, sensiblement transversalement à l'axe générateur (YY') de ladite barre transversale, ledit hauban présentant une première extrémité (ici l'embase 26) conçue pour venir se fixer sur la carrosserie 5, une seconde extrémité (ici le piétement 27) conçue pour se fixer sur la barre transversale 2, et au moins une poutre 24, 25 rigide reliant lesdites extrémités 26, 27.

Selon l'invention, ledit hauban comporte également, venu de matière avec ladite poutre 24, 25, un organe de suspension 15 intégré, conçu pour fournir un point d'arrimage arrière 16 à une colonne de direction 11.

La présente invention concerne bien entendu également un véhicule (non représenté), et notamment un véhicule automobile, destiné par exemple au transport individuel ou collectif de personnes, équipé d'une traverse de planche de bord 1, ou à tout le moins d'un hauban 23, conforme à l'invention.

L'invention concerne enfin également un procédé de fabrication d'une traverse de planche de bord 1 pour véhicule comprenant une étape (b) d'assemblage de moyens de réception 12 au cours de laquelle on met en place sur une barre transversale 2 de la traverse des moyens de réception 12 destinés à l'accueil et à la fixation d'une colonne de direction 11.

Selon l'invention, ledit procédé comporte une étape (a) de réalisation d'organes de suspension 13, 15 au cours de laquelle on réalise, de préférence séparément en pièces détachées distinctes l'une de l'autre, d'une part un premier organe de suspension 13 avant portant un premier point d'arrimage 14 pour la colonne de direction et d'autre part un second organe de suspension 15 arrière portant un second point d'arrimage 16 pour la colonne de direction, et en ce que, au cours de l'étape (b) d'assemblage, on rapporte et l'on fixe, de préférence par soudage, le premier organe de suspension 13 sur la face avant 3 de la barre transversale 2 destinée à être orientée vers l'habitacle, et le second organe de suspension 15 sur la face arrière 4 opposée de ladite barre transversale destinée à être orientée vers la carrosserie 5, de sorte à ne couvrir au plus que partiellement le secteur angulaire α0 du dessous de la barre transversale 2 qui est compris entre lesdits premier et second points d'arrimage 14, 16.

Le procédé conforme à l'invention permet notamment de réaliser les organes de suspension 13, 15 sous forme de pièces détachées individuelles, compactes et légères, sur lesquelles la colonne de direction 11 pourra venir en prise, au niveau des points d'arrimage 14, 16 qui la retiennent.

De préférence, l'étape (a) de réalisation des pièces détachées comporte une sous-étape (a1) au cours de laquelle on forme, de préférence par emboutissage, pliage ou moulage, le second organe de suspension 15 arrière d'un seul tenant avec un hauban 23 chargé de soutenir la barre transversale 2 sur le tablier 6 du véhicule.

On peut ainsi réaliser en un minimum d'opérations, particulièrement simples, reproductibles et économes en matière et en énergie, un organe de suspension intégré, léger et peu encombrant, positionné convenablement d'emblée par construction, ce qui simplifie l'assemblage et limite le taux de rebut.

## Revendications

1. Traverse de planche de bord pour véhicule, ladite traverse (1) comprenant une barre transversale (2) qui s'étend selon un axe générateur (YY') et qui présente, de part et d'autre dudit axe générateur (YY'), une face avant (3) destinée à être orientée vers l'intérieur de l'habitacle d'un véhicule et une face arrière (4) opposée, destinée à être orientée vers un pan de carrosserie (5) du véhicule, ladite barre transversale étant pourvue de moyens de réception (12) adaptés pour permettre la fixation d'une colonne de direction (11) à ladite barre transversale (2), ladite traverse étant **caractérisée en ce que** lesdits moyens de réception (12) sont fractionnés de part et d'autre de l'axe générateur (YY') en au moins d'une part un premier organe de suspension (13) avant, qui prend appui contre la face avant (3) de la barre transversale (2) afin de procurer un premier point d'arrimage (14) avant pour la colonne de direction (11), et d'autre part un second organe de suspension (15) arrière qui prend appui contre la face arrière (4) de ladite barre transversale de sorte à procurer un second point d'arrimage (16) arrière pour ladite colonne de direction, à distance du premier point d'arrimage (14), lesdits organes de suspension (13, 15) étant agencés de sorte à présenter, sous la barre transversale (2), dans le secteur angulaire (α₀) compris entre les premier et second points d'arrimage (14, 16), autour de l'axe générateur (YY'), une interruption (20) de leur couverture angulaire.

2. Traverse de planche de bord selon la revendication 1 **caractérisée en ce que** le premier organe de suspension (13) et le second organe de suspension (15) s'interrompent angulairement en retrait l'un de l'autre de telle sorte que s'ouvre entre eux, sur une partie du secteur angulaire (α₀) compris entre le premier et le second point d'arrimage, un sillon de dégagement (21) sensiblement parallèle à l'axe générateur (YY'), qui s'étend le long dudit axe générateur, sur la longueur (L) du tronçon de barre transversale (2) occupé par lesdits organes de suspension (13, 15), et dont le fond est formé par la face inférieure (22) de la barre transversale ainsi découverte.

3. Traverse de planche de bord selon la revendication 1 ou 2 **caractérisée en ce qu'**elle comporte au moins un hauban (23) destiné à venir se fixer sur la carrosserie (5) du véhicule, et de préférence sur le tablier (6) dudit véhicule, afin de soutenir la barre transversale (2), et **en ce que** le second organe de suspension (15) est venu de matière avec ledit hauban (23).

4. Traverse de planche de bord selon l'une des revendications précédentes **caractérisée en ce que** le premier et le second organe de suspension (13, 15) sont agencés de telle sorte que le plan d'accouplement (P_{A}) parallèle à l'axe générateur (YY') et contenant le premier et le second point d'arrimage (14, 16) est sensiblement tangent à la face extérieure inférieure (22) de la barre transversale, ou déporté en saillie au-delà de celle-ci.

5. Traverse de planche de bord selon l'une des revendications précédentes **caractérisée en ce que** le premier et le second organe de suspension (13, 15) présentent chacun respectivement, pour former les premier et second points d'arrimage (14, 16), une première semelle d'appui (30) et une seconde semelle d'appui (31) planes, lesdites semelles étant disposées à distance l'une de l'autre de façon coplanaires, dans le prolongement l'une de l'autre.

6. Traverse de planche de bord selon l'une des revendications précédentes **caractérisée en ce que** le premier organe de suspension (13) comporte d'un seul tenant d'une part une semelle d'appui (30) formant un éperon orienté vers l'avant et offrant le premier point d'arrimage (14), et d'autre part un crochet de retenue (32), comprenant par exemple une ou deux griffes (33) recourbées, ledit crochet (32) étant conçu pour venir en prise sur la face avant (3) et/ou la face supérieure (34) de la barre transversale (2) dont il épouse sensiblement le contour extérieur.

7. Véhicule équipé d'une traverse de planche de bord (1) selon l'une des revendications précédentes.

8. Hauban (23) de fixation pour traverse de planche de bord (1) de véhicule destiné à relier à la carrosserie (5) d'un véhicule la barre transversale (2) d'une traverse de planche de bord, sensiblement transversalement à l'axe générateur (YY') de ladite barre transversale, la face avant de ladite barre transversale (2) servant d'appui à un premier organe de suspension (13) avant, procurant un premier point d'arrimage (14) pour une colonne de direction (11), ledit hauban présentant une première extrémité (26) conçue pour venir se fixer sur la carrosserie, une seconde extrémité (27) conçue pour se fixer sur la barre transversale, et au moins une poutre (24, 25) rigide reliant lesdites extrémités (26, 27), ledit hauban étant **caractérisé en ce qu'**il comporte également, venu de matière avec ladite poutre (24, 25), un organe de suspension (15) intégré, conçu pour fournir un second point d'arrimage (16) arrière à la colonne de direction (11), lesdits organes de suspension (13, 15) étant agencés de sorte à présenter, sous la barre transversale (2), dans le secteur angulaire (α₀) compris entre les premier et second points d'arrimage (14, 16), autour de l'axe générateur (YY'), une interruption (20) de leur couverture angulaire.

9. Procédé de fabrication d'une traverse de planche de bord pour véhicule comprenant une étape (b) d'assemblage de moyens de réception au cours de laquelle on met en place sur une barre transversale (2) de la traverse (1) des moyens de réception (12) destinés à l'accueil et à la fixation d'une colonne de direction (11), ledit procédé étant **caractérisé en ce qu'**il comporte une étape (a) de réalisation d'organes de suspension au cours de laquelle on réalise, de préférence séparément en pièces détachées distinctes, d'une part un premier organe de suspension (13) avant portant un premier point d'arrimage (14) pour la colonne de direction, et d'autre part un second organe de suspension (15) arrière portant un second point d'arrimage (16) pour la colonne de direction, et **en ce que**, au cours de l'étape (b) d'assemblage, on rapporte et l'on fixe, de préférence par soudage, le premier organe de suspension (13) sur la face avant (3) de la barre transversale destinée à être orientée vers l'habitacle, et le second organe de suspension (15) sur la face arrière (4) opposée de ladite barre transversale destinée à être orientée vers la carrosserie (5), de sorte à ne couvrir au plus que partiellement le secteur angulaire (α₀) du dessous de la barre transversale (2) qui est compris entre lesdits premier et second points d'arrimage (14, 16).

10. Procédé selon la revendication 9 **caractérisé en ce que** l'étape (a) de réalisation des pièces détachées comporte une sous-étape (a1) au cours de laquelle on forme, de préférence par emboutissage, pliage ou moulage, le second organe de suspension (15) arrière d'un seul tenant avec un hauban (23) chargé de soutenir la barre transversale (2) sur le tablier (6) du véhicule.

## Patentansprüche

1. Querstrebe eines Armaturenbretts für Fahrzeug, wobei die Querstrebe (1) eine Querstange (2) umfasst, die sich entlang einer Erzeugungsachse (YY') erstreckt und zu beiden Seiten der Erzeugungsachse (YY') eine Vorderseite (3) aufweist, die dazu bestimmt ist, zum Inneren des Innenraums eines Fahrzeugs gerichtet zu sein, und eine entgegengesetzte Rückseite (4), die dazu bestimmt ist, zu einer Karosseriebahn (5) des Fahrzeugs gerichtet zu sein, wobei die Querstange mit Aufnahmemitteln (12) versehen ist, die angepasst sind, um das Befestigen einer Lenksäule (11) an der Querstange (2) zu erlauben, Querstrebe **dadurch gekennzeichnet, dass** die Aufnahmemittel (12) zu beiden Seiten der Erzeugungsachse (YY') in mindestens einerseits ein erstes vorderes Aufhängungsorgan (13), das gegen die Vorderseite (3) der Querstange (2) aufliegt, um eine erste vordere Befestigungsstelle (14) für die Lenksäule (11) bereitzustellen, und andererseits ein zweites hinteres Aufhängungsorgan (15), das gegen die Rückseite (4) der Querstange derart aufliegt, dass eine zweite hintere Befestigungsstelle (16) für die Lenksäule, von der ersten Befestigungsstelle (14) entfernt bereitgestellt wird, geteilt sind, wobei die Aufhängungsorgane (13, 15) derart eingerichtet sind, dass sie unter der Querstange (2) in dem Winkelsektor (α₀), der zwischen der ersten und zweiten Befestigungsstelle (14, 16) liegt, um die Erzeugungsachse (YY') einer Unterbrechung (20) ihrer Winkeldeckung aufweisen.

2. Querstrebe eines Armaturenbretts nach Anspruch 1, **dadurch gekennzeichnet, dass** sich das erste Aufhängungsorgan (13) und das zweite Aufhängungsorgan (15) winkelig im Rücksprung zueinander derart unterbrechen, dass sich zwischen ihnen auf einem Teil des Winkelsektors (α₀), der zwischen der ersten und der zweiten Befestigungsstelle liegt, eine Aussparungsfurche (21) im Wesentlichen parallel zu der Erzeugungsachse (YY') öffnet, die sich entlang der Erzeugungsachse auf der Länge (L) des Abschnitts der Querstange (2), der von den Aufhängungsorganen (13, 15) belegt ist, erstreckt, und deren Grund durch die Unterseite (22) der derart freigelegten Querstange gebildet ist.

3. Querstrebe eines Armaturenbretts nach Anspruch 1 oder 2, **dadurch gekennzeichnet, dass** sie mindestens ein Verankerungsseil (23) umfasst, das dazu bestimmt ist, auf der Karosserie (5) des Fahrzeugs und vorzugsweise auf der Stirnwand (6) des Fahrzeugs befestigt zu werden, um die Querstange (2) zu stützen, und dass das zweite Aufhängungsorgan (15) aus einem Teil mit dem Verankerungsseil (23) hergestellt ist.

4. Querstrebe eines Armaturenbretts nach einem der vorhergehenden Ansprüche, **dadurch gekennzeichnet, dass** das erste und das zweite Aufhängungsorgan (13, 15) derart eingerichtet sind, dass die Kopplungsebene (P_{A}), die zu der Erzeugungsachse (YY') parallel ist und die die erste und die zweite Befestigungsstelle (14, 16) enthält, im Wesentlichen zu der unteren Außenseite (22) der Querstange tangierend oder über diese hinaus vorstehend verlagert ist.

5. Querstrebe eines Armaturenbretts nach einem der vorhergehenden Ansprüche, **dadurch gekennzeichnet, dass** das erste und das zweite Aufhängungsorgan (13, 15) jeweils zum Bilden der ersten und zweiten Befestigungsstelle (14, 16) eine erste flache Auflagesohle (30) und eine zweite flache Auflagesohle (31) aufweisen, wobei die Sohlen voneinander beabstandet koplanar angeordnet eine in der Verlängerung der anderen sind.

6. Querstrebe eines Armaturenbretts nach einem der vorhergehenden Ansprüche, **dadurch gekennzeichnet, dass** das erste Aufhängungsorgan (13) aus einem Stück einerseits eine Auflagesohle (30) umfasst, die einen Dorn bildet, der nach vorn gerichtet ist und die erste Befestigungsstelle (14) bietet, und andererseits einen Rückhaltehaken (32), der zum Beispiel eine oder zwei zurückgebogene Klauen (33) umfasst, wobei der Haken (32) ausgelegt ist, um auf der Vorderseite (3) und/oder der Oberseite (34) der Querstange (2), an deren Außenkontur er sich im Wesentlichen legt, zum Eingreifen zu kommen.

7. Fahrzeug, das mit einer Querstrebe eines Armaturenbretts (1) nach einem der vorhergehenden Ansprüche ausgestattet ist.

8. Verankerungsseil (23) zum Befestigen für Querstrebe eines Armaturenbretts (1) für ein Fahrzeug, das dazu bestimmt ist, die Querstange (2) einer Querstrebe eines Armaturenbretts mit der Karosserie (5) zu verbinden, im Wesentlichen quer zu der Erzeugungsachse (YY') der Querstange, wobei die Vorderseite der Querstange (2) als Auflage für ein erstes vorderes Aufhängungsorgan (13) dient, das eine erste Befestigungsstelle (14) für eine Lenksäule (11) bietet, wobei das Verankerungsseil ein erstes Ende (26) aufweist, das ausgelegt ist, um sich auf der Karosserie zu befestigen, ein zweites Ende (27), das konzipiert ist, um sich auf der Querstange zu befestigen, und mindestens einen starren Träger (24, 25), der die Enden (26, 27) verbindet, Verankerungsseil **dadurch gekennzeichnet, dass** es auch aus einem Stück mit dem Träger (24, 25) ein integriertes Aufhängungsorgan umfasst, das ausgelegt ist, um eine zweite hintere Befestigungsstelle (16) an der Lenksäule (11) zu liefern, wobei die Aufhängungsorgane (13, 15) derart eingerichtet sind, dass sie unter der Querstange (2) in dem Winkelsektor (α₀), der zwischen der ersten und der zweiten Befestigungsstelle (14, 16) um die Erzeugungsachse (YY') liegt, eine Unterbrechung (20) ihrer Winkeldeckung umfassen.

9. Herstellungsverfahren einer Querstrebe eines Armaturenbretts für Fahrzeug, das einen Schritt (b) des Zusammenfügens von Aufnahmemitteln umfasst, in dessen Verlauf man auf einer Querstange (2) der Querstrebe (1) Aufnahmemittel (12) platziert, die zum Aufnehmen und Befestigen einer Lenksäule (11) bestimmt sind, Verfahren **dadurch gekennzeichnet, dass** es einen Schritt (a) des Herstellens von Aufhängungsorganen umfasst, in dessen Verlauf man vorzugsweise getrennt in getrennten Einzelteilen einerseits ein erstes vorderes Aufhängungsorgan (13), das eine erste Befestigungsstelle (14) für die Lenksäule trägt, und andererseits ein zweites hinteres Aufhängungsorgan (15), das eine zweite Befestigungsstelle (16) für die Lenksäule trägt, herstellt, und dass man im Laufe des Zusammenfügeschritts (b) vorzugsweise durch Schweißen das erste Aufhängungsorgan (13) auf der Vorderseite (3) der Querstange, die dazu bestimmt ist, zu dem Innenraum gerichtet zu sein, und das zweite Aufhängungsorgan (15) auf der entgegengesetzten Rückseite (4) der Querstange, die dazu bestimmt ist, zu der Karosserie (5) gerichtet zu sein, derart anbaut oder befestigt, dass der Winkelsektor (α₀) der Unterseite der Querstange (2), der zwischen der ersten und der zweiten Befestigungsstelle (14, 16) liegt, maximal teilweise abdeckt.

10. Verfahren nach Anspruch 9, **dadurch gekennzeichnet, dass** der Herstellungsschritt (a) der Einzelteile einen Unterschritt (a1) umfasst, in dessen Verlauf man vorzugsweise durch Stanzen, Falten oder Formen das zweite hintere Aufhängungsorgan (15) aus einem Stück mit einem Verankerungsseil (23), das die Querstange (2) auf der Stirnwand (6) des Fahrzeugs halten soll, bildet.

## Claims

1. A dashboard crossmember for a vehicle, said crossmember (1) including a crossbar (2) which extends along a generatrix axis (YY') and which has, on either side of said generatrix axis (YY'), a front face (3) intended to be oriented toward the interior of the passenger compartment of a vehicle and an opposite rear face (4) intended to be oriented toward a bodywork part (5) of the vehicle, said crossbar being provided with receiving means (12) adapted to permit the fixing of a steering column (11) to said crossbar (2), said crossmember being **characterized in that** said receiving means (12) are split on either side of the generatrix axis (YY') into at least, on the one hand, a first front suspension member (13), which rests against the front face (3) of the crossbar (2) so as to obtain a first front anchor point (14) for the steering column (11) and, on the other hand, a second rear suspension member (15) which rests against the rear face (4) of said crossbar so as to obtain a second rear anchor point (16) for said steering column, at a distance from the first anchor point (14), said suspension members (13, 15) being arranged so as to present, beneath the crossbar (2), in the angular sector (α₀) comprised between the first and second anchor points (14, 16), about the generatrix axis (YY'), an interruption (20) of their angular coverage.

2. A dashboard crossmember according to Claim 1, **characterized in that** the first suspension member (13) and the second suspension member (15) break off in an angular manner away from one another such that between them over a part of the angular sector (α₀) comprised between the first and the second anchor point, a clearance groove (21) opens, substantially parallel to the generatrix axis (YY'), which extends along said generatrix axis, over the length (L) of the section of crossbar (2) occupied by said suspension members (13, 15), and the bottom of which is formed by the interior face (22) of the crossbar which is thus uncovered.

3. The dashboard crossmember according to Claim 1 or 2, **characterized in that** it comprises at least one stay (23) intended to come to be fixed on the body (5) of the vehicle, and preferably on the cowl panel (6) of said vehicle, so as to support the crossbar (2), and **in that** the second suspension member (15) is integrally formed with said stay (23).

4. The dashboard crossmember according to one of the preceding claims, **characterized in that** the first and the second suspension member (13, 15) are arranged such that the coupling plane (P_{A}) parallel to the generatrix axis (YY') and containing the first and the second anchor point (14, 16) is substantially tangent to the exterior lower face (22) of the crossbar, or offset projecting beyond the latter.

5. The dashboard crossmember according to one of the preceding claims, **characterized in that** the first and the second suspension member (13, 15) each have respectively, for forming the first and second anchor points (14, 16), a first flat support plate (30) and a second flat support plate (31), said plates being disposed at a distance from one another in a coplanar manner, in the extension one of the other.

6. The dashboard crossmember according to one of the preceding claims, **characterized in that** the first suspension member (13) comprises in one piece on the one hand a support plate (30) forming a spur oriented toward the front and offering the first anchor point (14), and on the other hand a catch hook (32), including for example one or two curved claws (33), said hook (32) being designed to come into engagement on the front face (3) and/or the upper face (34) of the crossbar (2), the exterior contour of which it fits substantially.

7. A vehicle equipped with a dashboard crossmember (1) according to one of the preceding claims.

8. A fixing stay (23) for a dashboard crossmember (1) of a vehicle, intended to connect to the body (5) of a vehicle the crossbar (2) of a dashboard crossmember, substantially transversely to the generatrix axis (YY') of said crossbar, the front face of said crossbar (2) serving as support to a first front suspension member (13), obtaining a first anchor point (14) for a steering column (11), said stay having a first end (26) designed to come to be fixed on the body, a second end (27) designed to be fixed on the crossbar, and at least one rigid beam (24, 25) connecting said ends (26, 27), said stay being **characterized in that** it also comprises, integrally formed with said beam (24, 25), an integrated suspension member (15), designed to provide a second rear anchor point (16) to the steering column (11), said suspension members (13, 15) being arranged so as to present, beneath the crossbar (2), in the angular sector (α₀) comprised between the first and second anchor points (14, 16), about the generatrix axis (YY'), an interruption (20) of their angular coverage.

9. A method for manufacture of a dashboard crossmember for a vehicle, including a step (b) of assembly of receiving means, during which there are put in place on a crossbar (2) of the crossmember (1) receiving means (12) intended for the receiving and fixing of a steering column (11), said method being **characterized in that** it comprises a step (a) of realization of suspension members, during which there are realized, preferably separately in distinct detached pieces, on the one hand a first front suspension member (13) carrying a first anchor point (14) for the steering column, and on the other hand a second rear suspension member (15) carrying a second anchor point (16) for the steering column, and **in that**, during the assembly step (b), there are added and fixed, preferably by welding, the first suspension member (13) on the front face (3) of the crossbar intended to be oriented toward the passenger compartment, and the second suspension member (15) on the rear opposite face (4) of said crossbar intended to be oriented toward the body (5), so as only to cover at most partially the angular sector (α₀) of the bottom of the crossbar (2) which is comprised between said first and second anchor points (14, 16).

10. The method according to Claim 9, **characterized in that** the step (a) of realization of the detached pieces comprises a sub-step (a1), during which there is formed, preferably by stamping, bending or moulding, the second rear suspension member (15) in one piece with a stay (23), responsible for supporting the crossbar (2) on the cowl panel (6) of the vehicle.
